# EUROPÄISCHE PATENTSCHRIFT

(11) **EP 2 859 616 B1**
(45) Veröffentlichungstag und Bekanntmachung des Hinweises auf die Patenterteilung: **06.09.2017**
(21) Anmeldenummer: 13728670.4
(22) Anmeldetag: 17.05.2013
(51) Int. Cl.: H01Q 1/22, B65D 17/00, G06K 19/077

(54) **DOSE**
SOCKET
BOÎTE

(30) Priorität: 06.06.2012 AT 6522012; 19.07.2012 AT 502852012
(43) Veröffentlichungstag der Anmeldung: 15.04.2015
(73) Patentinhaber: Seibersdorf Labor GmbH, 2444 Seibersdorf (AT)
(72) Erfinder: SCHMID, Gernot, A-2833 Bromberg (AT)
(74) Vertreter: Wildhack & Jellinek
(86) Internationale Anmeldenummer: PCT/AT2013/050110
(87) Internationale Veröffentlichungsnummer: WO 2013/181680

(56) Entgegenhaltungen:
- WO-A1-98/32104
- DE-A1- 10 344 270
- JP-A- 2007 238 138
- US-A1- 2011 102 150

## Beschreibung

Die Erfindung betrifft eine Dose gemäß dem Oberbegriff des Patentanspruches 1.

Aus dem Stand der Technik ist eine Vielzahl von Getränkedosen bekannt, die mittels eines Einmaiverschlusses geöffnet werden können, wobei mit dem Öffnen jeweils ein Verschlussbereich aus dem Körper der Dose herausgebrochen wird, sodass der Inhalt der Dose aus dieser entleert werden kann.

Es ist aus dem Stand der Technik auch möglich, an Gegenständen, insbesondere auch an Dosen, RFID-/NFC-Antennen und RFID-/NFC-Transponder anzuordnen, um mittels eines externen Datenkommunikationsgerätes Daten, die im Transponder abgespeichert sind, an das externe Kommunikationsgerät zu übertragen. Dies ist zum Beispiel in der JP2007238138 und der DE10344270 offenbart. Aus dem Stand der Technik ist jedoch keine Möglichkeit bekannt, dass Daten ausschließlich dann von einem Behältnis an ein externes Datenkommunikationsgerät übertragbar sind, wenn ein Einmalverschluss auf dem Behältnis geöffnet wurde. Eine solche Vorrichtung könnte beispielsweise dazu verwendet werden, bestimmte, im Transponder abgespeicherte Informationen nur demjenigen zugänglich zu machen, der die jeweilige Dose bzw. den jeweiligen Behälter erworben hat. Typischerweise kann eine solche Dose vorteilhaft für Gewinnspiele eingesetzt werden, bei denen es erforderlich ist, dass der jeweilige Mitspieler die Dose gekauft bzw. geöffnet hat.

Aufgabe der Erfindung ist es somit, eine Dose zur Verfügung zu steilen, mit der Daten von einem an der Dose angeordneten Transponder an ein externes Datenkommunikationsgerät erst dann übertragbar sind, wenn die jeweilige Dose geöffnet ist und/oder mit einem externen Datenkommunikationsgerät auf einem auf der Dose angeordneten Transponder erst dann Daten abgespeichert werden können, wenn die jeweilige Dose geöffnet ist.

Die Erfindung löst diese Aufgabe bei der Dose der eingangs genannten Art mit dem Merkmal des Kennzeichens des Patentanspruches 1. Erfindungsgemäß ist bei einer Dose, umfassend einen zumindest teilweise elektrisch leitfähigen Körper, insbesondere aus Aluminium, wobei auf einer Stirnwand der Dose ein Verschlussbereich durch eine Sollbruchkante zumindest teilweise abgegrenzt ist und wobei die Dose ein Öffnungselement aufweist, wobei das Öffnungselement in seiner Ausgangslage an der Stirnwand der Dose zumindest teilweise flächig anliegt und mit der Stirnwand an zumindest einer Stelle verbunden ist, wobei bei Verschwenken des Öffnungselements gegenüber der Dose von der Ausgangslage in eine Öffnungslage der Verschlussbereich von der Sollbruchkante abreißt und sich in dem von der Sollbruchkante abgegrenzten Zwischenbereich eine Öffnung zum Entleeren des Inhalts der Dose ausbildet, vorgesehen, dass das Öffnungselement einen Trägerkörper aus elektrisch und/oder magnetisch isolierendem Material aufweist oder aus diesem besteht, dass das Öffnungselement eine am oder im Trägerkörper angeordnete Antenne sowie einen an die Antenne angeschlossenen Transponderchip aufweist, wobei die Antenne in der Ausgangslage im Nahebereich der Dose, insbesondere im Bereich der Stirnwand der Dose, angeordnet ist, und dass derjenige Wand- oder Oberflächenbereich der Stirnwand der Dose, an dem das Öffnungselement anliegt, elektrisch und/oder magnetisch leitfähig ist.

Hierbei ist vorteilhaft, dass eine Datenkommunikation zwischen dem auf der Dose angeordneten Transponder und einem externen Datenkommunikationsgerät erst dann möglich ist, wenn die Dose geöffnet ist. Eine Datenkommunikation ist jedenfalls dann unmöglich, wenn das Öffnungselement in seiner Ausgangslage liegt und die Dose noch nicht geöffnet wurde.

Um eine Kommunikation zwischen dem auf der Dose angeordneten Transponder und einem externen Datenkommunikationsgerät wirksam zu vermeiden, kann vorgesehen sein, dass die Antenne in der Ausgangslage einen maximalen Abstand von weniger als 3 mm, insbesondere von weniger als 0,2 mm, von der Wand der Dose aufweist und/oder dass die Antenne zumindest teilweise an der Dose anliegt.

Zum selben Zweck kann alternativ oder zusätzlich vorgesehen sein, dass die Antenne derart angeordnet ist, dass in der Ausgangslage elektromagnetische Felder, die auf die Antenne gerichtet sind, vom Wand- oder Oberflächenbereich der Dose derart verändert werden, dass die Einkoppelung von elektromagnetischen Feldern in die Antenne unterdrückt wird bzw. hinreichend geschwächt wird, so dass keine Datenkommunikation zwischen dem auf der Dose angeordneten Transponder und einem externen Datenkommunikationsgerät möglich ist.

Um eine Kommunikation zwischen einem externen Datenkommunikationsgerät mit dem Transponder zu ermöglichen, kann vorgesehen sein, dass die Antenne in Öffnungslage vom leitfähigen Wand- und Oberflächenbereich der Dose abgehoben und/oder entfernt ist und/oder zu diesem verschwenkt ist und dass die Antenne in Öffnungslage elektromagnetische Felder, die auf sie gerichtet sind, in einer für drahtlose Datenkommunikation ausreichenden Form und Intensität empfängt und an den Transponderchip weitergibt.

Um eine Abschirmung oder Verdrängung von auf die Antenne gerichteten elektromagnetischen Wellen in der Öffnungslage wirksam zu vermeiden, kann vorgesehen sein, dass bei einer Übertragungsfrequenz im Bereich zwischen 100 kHz und 1000 MHz, insbesondere im Bereich von 120 bis 135 kHz, im Bereich von 13 bis 14 MHz oder im Bereich von 860 bis 910 MHz, und/oder dass die spezifische elektrische Leitfähigkeit des Trägermaterials des Öffnungselements kleiner ist als 1 S/m, **und/oder** dass die elektrische Permittivität des Trägermaterials des Öffnungselements kleiner ist als 100*8,854*10⁻¹² As/Vm, **und/oder** dass die magnetische Permeabilität des Öffnungselementes kleiner ist als (1+2,2*10⁻⁵)* 4*π*10⁻⁷ Vs/Am.

Um eine Abschirmung oder Verdrängung von auf die Antenne gerichteten elektromagnetischen Wellen in der Ausgangslage wirksam zu gewährleisten, kann vorgesehen sein, dass bei einer Übertragungsfrequenz im Bereich zwischen 100 kHz und 1000 MHz, insbesondere im Bereich von 120 bis 135 kHz, im Bereich von 13 bis 14 MHz oder im Bereich von 860 bis 910 MHz, derjenige Wand- oder Oberflächenbereich der Dose, an dem das Öffnungselement anliegt, eine spezifische elektrische Leitfähigkeit von zumindest 10 S/m, insbesondere von zumindest 10⁶ S/m aufweist, **und/oder** eine magnetische Permeabilität von zumindest (1+2,2*10⁻⁵)* 4*π*10⁻⁷ Vs/Am, insbesondere von zumindest 0,99*4*π*10⁻⁷ Vs/Am, aufweist.

Eine besonders einfach herzustellende Ausführungsform der Erfindung sieht vor, dass der Verschlussbereich und die Sollbruchkante an einer Stirnwand der Dose ausgebildet sind.

Eine besonders vorteilhafte Anordnung, mit der ein vorteilhaftes Verschwenken des Öffnungselementes möglich ist, sieht vor, dass das Öffnungselement über eine Niete mit der Dose verbunden ist, wobei das Öffnungselement einen in seiner Ausgangslage am Verschlussbereich anliegenden Druckbereich zum Eindrücken des Verschlussbereichs aufweist.

Um die Dose einfach zu öffnen, kann hierbei vorgesehen sein, dass das Öffnungselement einen dem Druckbereich gegenüberliegenden Betätigungsbereich aufweist, wobei der Druckbereich und der Betätigungsbereich durch die Niete voneinander abgegrenzt sind und gemeinsam wie ein zweiarmiger durch die Niete angelenkter Hebel wirken.

Eine besonders einfache mechanische Ausgestaltung, die ein gutes Verschwenken des Öffnungselementes gegenüber der Dose ermöglichst, sieht vor, dass das Öffnungselement ein gegenüber seinem Körper verschwenkbares Verbindungselement aufweist, das mittels der Niete mit der Wand der Dose verbunden ist.

Eine besonders einfache Positionierung des Transponders kann erreicht werden, indem in Ausgangslage der Transponderchip in einem Bereich des Öffnungselements angeordnet ist, der am Verschlussbereich anliegt.

Besonders vorteilhaft bei der Verwendung von Übertragungsfrequenzen von 10-15 MHz ist, dass die Antenne ringförmig ausgebildet ist und insbesondere in einer entlang der Umfangskante des Öffnungselements in einer Einkerbung angeordnet ist.

Eine besonders vorteilhaft herstellbare Bauform sieht vor, dass das Öffnungselement zweistückig ausgebildet ist und einen an der Stirnwand angelenkten Basisteil sowie einen mit dem Basisteil verbundenen und einen elektrisch nicht leitfähigen Körper aufweisenden Antennenteil aufweist, wobei der Transponderchip und die Antenne im Antennenteil angeordnet, insbesondere eingegossen, sind und wobei der Basisteil zumindest einen Fortsatz, insbesondere zwei Fortsätze, aufweist, der mit dem Antennenteil verbunden ist und insbesondere an diesem anliegt.

Hierbei kann vorteilhaft vorgesehen sein, dass der Antennenteils einen Gehäuseteil und einen Ringfortsatz aufweist, wobei die Antenne zumindest teilweise im Ringfortsatz verläuft, und/oder wobei der Gehäuseteil zumindest eine Rastausnehmung, insbesondere zwei Rastausnehmungen, aufweist, in die das Ende des Fortsatzes, insbesondere die beiden Enden der Fortsätze, des Basisteils eingreift, insbesondere eingerastet ist, und/oder wobei der Fortsatz oder die Fortsätze des Basisteils am Ringfortsatz des Antennenteil anliegen.

Eine zusätzliche Unterdrückung der Kommunikation kann mit zwei mit der Antenne, insbesondere leitfähig oder kapazitiv, gekoppelten Plattenelementen gewährleistet werden, die in ihrer Ausgangslage an der Stirnwand angenähert sind und in Öffnungslage von der Stirnwand beabstandet angeordnet sind.

Ein bevorzugtes Ausführungsbeispiel der Erfindung wird anhand der folgenden Zeichnungsfiguren näher dargestelit.

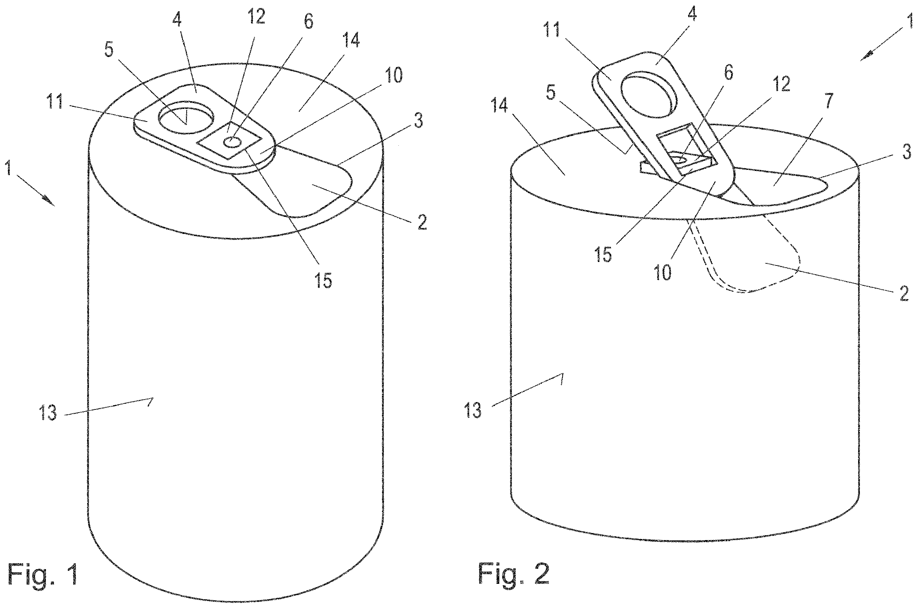

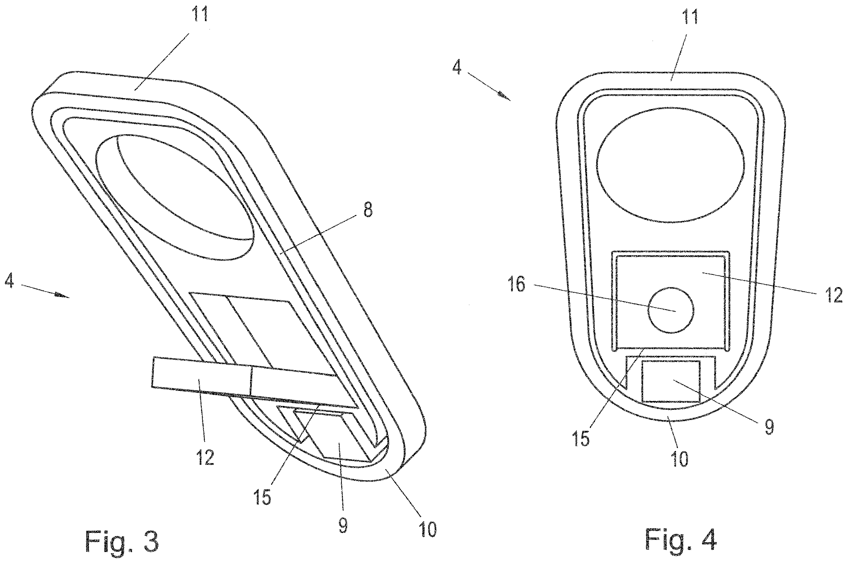

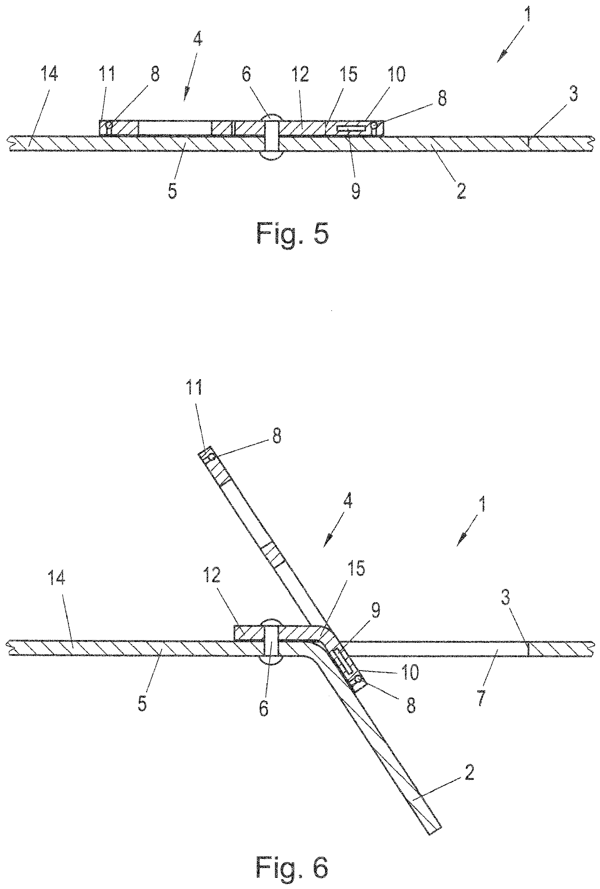

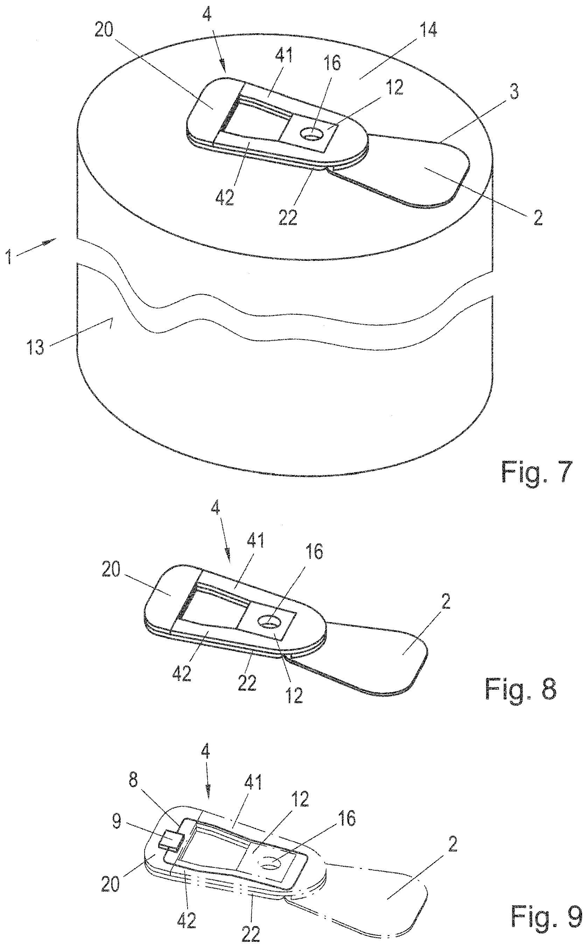

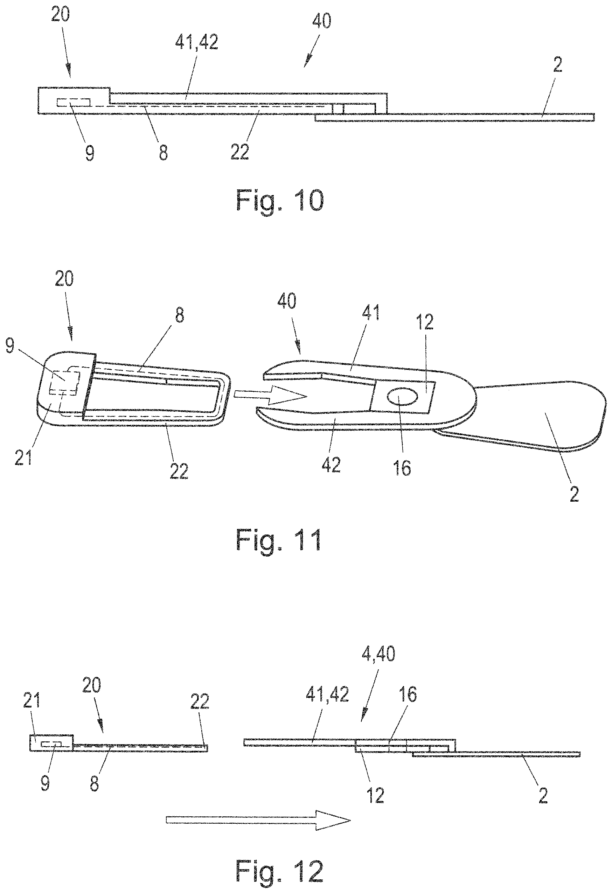

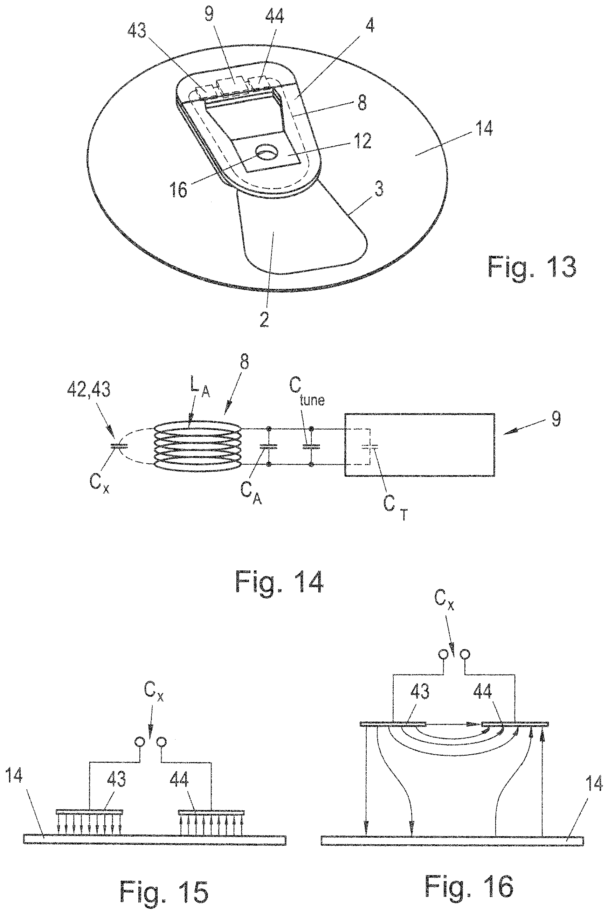

**Fig. 1** zeigt eine Ausführungsform in Ausgangslage. **Fig. 2** zeigt die in Fig. 1 dargestellte Ausführungsform in Öffnungslage. **Fig. 3** zeigt das Öffnungselement in Öffnungslage schräg von der Seite. **Fig. 4** zeigt das Öffnungselement in der Ausgangslage von oben. **Fig. 5** zeigt das elektromagnetische Verhalten der Dose sowie des Öffnungselementes in Ausgangslage. **Fig. 6** zeigt das elektromagnetische Verhalten der Dose sowie des Öffnungselementes in Öffnungsiage. **Fig. 7** zeigt eine Ausführungsform der Erfindung in Ausgangslage. **Fig. 8** zeigt das Öffnungselement in Ausgangslage schräg von der Seite. **Fig. 9** zeigt das in **Fig. 8** dargestellte Öffnungselement in transparenter Ansicht. **Fig. 10** zeigt das in **Fig. 8** dargestellte Öffnungselement von der Seite. **Fig. 11** zeigt das in **Fig. 8** dargestellte Öffnungselement beim Zusammensetzen. **Fig. 12** zeigt die Darstellung des Zusammensetzens der beiden Teile des Öffnungselements von der Seite. In **Fig. 13** ist die Stirnwand einer Dose mitsamt einem Öffnungselement gemäß einer weiteren alternativen Ausführungsform der Erfindung dargestellt. **Fig. 14** zeigt ein Ersatzschaltbild der in **Fig. 13** dargestellten Ausführungsform der Erfindung. **Fig. 15** zeigt den Verlauf des elektromagnetischen Feldes beim geschlossenen Öffnungselement 4. **Fig. 16** zeigt den Verlauf des elektromagnetischen Feldes bei geöffnetem Öffnungselement 4.

In **Fig. 1** ist eine zylindrische Dose 1 dargestellt. Der Körper der Dose 1 besteht zur Gänze aus Aluminium, wobei die Dose 1 an ihrer Mantelfläche 13 eine bedruckte, dekorative Folie aufweisen kann. An der Stirnwand 14 der Dose 1 ist ein Verschlussbereich 2 vorgesehen, der durch eine Sollbruchkante 3 abgegrenzt ist. Ferner weist die Dose 1 ein Öffnungselement 4 auf, das über eine eine Ausnehmung 16 (Fig. 3) des Öffnungselementes 4 durchsetzende Niete 6 mit der Stirnwand 14 der Dose 1 verbunden ist. Der Körper der Dose 1 besteht im vorliegenden Ausführungsbeispiel zur Gänze aus Aluminium. Grundsätzlich reicht es jedoch aus, dass derjenige Wand- und Oberflächenbereich 5 der Dose, dem das Öffnungselement 4 anliegt, eine ausreichende Rückwirkung auf ein von außen appliziertes elektromagnetisches Feld im Bereich des Öffnungselementes 4 bewirkt, sodass bei anliegendem Öffnungselement 4 am Wand- und Oberflächenbereich 5 keine drahtlose elektromagnetische Datenübertragung zwischen einer im bzw. am Öffnungselement 4 angeordneten Antenne 8 und einem externen Datenkommunikationsgerät möglich ist. **(****Fig. 3****)** Das Öffnungselement 4 verfügt über ein gegenüber seinem Körper verschwenkbares Verbindungselement 12 mit der Ausnehmung 16, das mittels der Niete 6 mit der Stirnwand 14 der Dose 1 verbunden ist und das an der Stirnwand 14 der Dose 1 flächig anliegt. üblicherweise lässt sich das Öffnungselement 4 um die Nietenachse der Niete 4 drehen, es liegt im vorliegenden Ausführungsbeispiel keine bewegungsstarre Verbindung des Öffnungselements 4 mit der Dose vor. Im vorliegenden Ausführungsbeispiel liegt das Öffnungselement an der Stirnwand 14 der Dose 1 flächig an.

In **Fig. 2** ist die in **Fig. 1** dargestellte Ausführungsform der Dose 1 in Öffnungslage dargestellt. Beim Vorgang des Öffnens wird ein dem Verschlussbereich 2 abgewandter Betätigungsbereich 11 des Öffnungselementes 4 angehoben und das gesamte Öffnungselement 4 bezüglich der Anienkkante 15 zwischen dem Verbindungselement 12 und dem Körper des Öffnungselementes 4 verschwenkt. Hierdurch wird der am Verschlussbereich 2 anliegende Druckbereich 10 des Öffnungselementes 4 in Richtung des Verschlussbereiches 2 ins Innere der Dose 1 gedrückt, wodurch der Verschlussbereich 2 entlang der Sollbruchkante 3 von der Stirnwand 14 der Dose 1 abreißt und in die Dose 1 eintritt. Hierdurch wird eine Öffnung 7 geschaffen, aus der der Inhalt der Dose 1 aus dieser entleert werden kann.

In **Fig. 3** ist das Öffnungselement 4 im Detail dargestellt. Das Öffnungselement 4 weist einen Trägerkörper aus elektrisch und magnetisch isolierendem Material auf, wobei auf der der Deckwand 14 zugewandten Seite des Öffnungselementes 4 eine Einkerbung vorgesehen ist, die ringförmig geschlossen im Öffnungselement 4 verläuft. In dieser Einkerbung verlaufen die Drahtwicklungen der Antenne 8, die mit einem im Druckbereich 10 des Öffnungselementes 4 gelegenen Transponderchip 9 verbunden ist. Die Antenne 8 verläuft entland des Randes der unteren Stirnfläche des Öffnungselementes 4, die der Deckwand 14 der Dose 1 zugewandt ist. Wie aus Fig. 4 ersichtlich, weist das Verbindungselement 12 des Öffnungselementes 4 eine zentrale Ausnehmung 16 auf, durch die die Niete 6 hindurchgeführt ist.

In einer alternativen Ausführungsform könnte es auch ausreichen, den Transponderchip 9 sowie die Antenne 8 auf einem entsprechend ausgeformten Klebeetikett oben auf das Öffnungselements 4 aufzukleben.

**Fig. 5** zeigt einen Schnitt durch die Dose 1 und das Öffnungselement 4 sowie das elektromagnetische Verhalten der Dose 1 und des Öffnungselementes 4 in Ausgangslage. Wie bereits erwähnt, liegt die Antenne 8 in einer Einkerbung im Körper des Öffnungseiementes 4 an der der Stirnwand 14 der Dose 1 zugewandten Seite. Die Antenne 8 liegt im vorliegenden Ausführungsbeispiel vollflächig an der Stirnwand 14 der Dose an. Dies ist jedoch nicht zwingend erforderlich. Für den gewünschten Effekt einer ausreichenden Rückwirkung auf die von einem externen Datenkommunikationsgerät auf die Antenne 8 gerichteten elektromagnetischen Felder, sodass zwischen dem externen Datenkommunikationsgerät und dem Transponderchip 9 über die Antenne 8 eine Kommunikation unmöglich ist, reicht es aus, dass die Antenne 8 in der Ausgangslage einen maximalen Abstand von weniger als 2-3 mm aufweist. In der Ausgangslage werden dann magnetische Felder, die auf die Antenne 8 gerichtet sind, vom Wand- und Oberflächenbereich 5 auf der Stirnwand 14 der Dose 1 ausreichend verdrängt bzw. die elektrischen Eigenschaften der Antenne 8 derart verändert, sodass zwischen einem externen Datenkommunikationsgerät und dem Transponderchip 9 über die Antenne 8 eine Kommunikation unmöglich ist. Die elektrische Verbindung zwischen dem Transponderchip 9 und der Antenne 8 ist in den **Fig. 5 und 6** nicht dargestellt.

**Fig. 6** zeigt einen Schnitt durch die Dose 1 und das Öffnungselement 4 sowie das elektromagnetische Verhalten der Dose 1 und des Öffnungselementes 4 in Öffnungslage. Im Gegensatz zur Ausgangslage ist in der Öffnungslage aufgrund des Verschwenkens des Öffnungselementes 4 gegenüber der Stirnwand 14 der Dose 1 die Antenne 8 im Betätigungsbereich 11 des Öffnungselementes 4 von der Stirnwand 14 der Dose 1 abgehoben. In diesem Zustand ist das Öffnungselement 4 vom Wand- und Oberflächenbereich 5 deutlich elektromagnetisch entkoppelt. Dass heißt, die vom Wand- und Oberflächenbereich 5 verursachte Rückwirkung auf das von einem externen Datenkommunikation applizierte elektromagnetische Feld wirkt sich in nur sehr abgeschwächter Form auf die Antenne 8 aus. Auf diese Art kann elektromagnetische Energie sowie Information mittels elektromagnetischer Felder von einem externen Datenkommunikationsgerät über die Antenne 8 an den Transponderchip 9 übertragen werden.

Typischerweise werden Dosen vollständig aus Aluminium oder einem sonstigen Metall gefertigt. Dies ist jedoch im vorliegenden Ausführungsbeispiel nicht erforderlich. Es ist, um den ausreichenden Effekt der Feldverdrängung zu gewährleisten, lediglich erforderlich, dass derjenige Wand- und Oberflächenbereich 5 der Dose 1, an dem das Öffnungselement 4 anliegt, elektrisch und/oder magnetisch leitfähig ist. Der Wand- oder Oberflächenbereich 5 der Dose 1, an den das Öffnungselement 4 anliegt, weist im vorliegenden Ausführungsbeispiel eine elektrische Leitfähigkeit von zumindest 10⁶ S/m insbesondere von zumindest 10 S/m auf. Zudem weist die Dose 1 im Wand- und Oberflächenbereich 5, an den das Öffnungselement 4 anliegt, eine magnetische Permeabilität von zumindest 4*π*10⁻⁷ Vs/Am insbesondere von zumindest 0,99*4*π*10⁻⁷ Vs/Am auf. Aluminium, das typischerweise als Material für den Wand- und/oder Oberflächenbereich der Dose 1, insbesondere für die gesamte Dose 1, eingesetzt wird, weist eine elektrische Leitfähigkeit von 37*10⁶ S/m und eine magnetische Permeabilität von (1+2,2*10⁻⁵)* 4*π*10⁻⁷ Vs/Am auf.

In **Fig. 5 und 6** sind weiters magnetische Feldlinien B eingezeichnet, um den speziellen Fall der magnetischen Kopplung zwischen einem von einem externen Datenkommunikationsgerät erzeugten magnetischen Feld und der Antenne 8 zu illustrieren.
In dem in **Fig. 5** dargestellten Fall mit dem Öffnungselement 4 in Ausgangslage, d.h., mit einem dem Wand- und Oberflächenbereich 5 anliegenden Öffnungselement 4, werden im elektrisch und/oder magnetisch leitfähigen Wand- und Oberflächenbereich 5 vom magnetischen Feld des externen Datenkommunikationsgerätes Wirbelströme J erzeugt, die im Bereich des Öffnungselementes 4 eine Feldverdrängung bewirken, sodass das resultierende die Antenne 8 durchsetzende Magnetfeld zu gering ist, um eine drahtlose elektromagnetische Kommunikation zwischen dem externen Datenkommunikationsgerät und dem Transponderchip 9 über die Antenne 8 zu ermöglichen.
In dem in **Fig. 6** dargestellten Fall mit dem gegenüber dem Wand- und Oberflächenbereich 5 abgehobenen Öffnungselement 4 besteht ein ausreichend großer Abstand zwischen der Antenne 8 und dem Wand- und Oberflächenbereich 5, sodass die durch die Vilirbeistrcrne im Wand- und Oberflächenbereich 5 bewirkte Feldverdrängung im Bereich des Wand- und Oberflächenbereichs 5 nur mehr stark abgeschwächt auf die Antenne 8 wirkt und die Antenne 8 ausreichend vom Magnetfeld durchsetzt wird, sodass eine drahtlose elektromagnetische Kommunikation zwischen dem externen Datenkommunikationsgerät und dem Transponderchip 9 über die Antenne 8 möglich ist.

Das Öffnungselement 4 ist im vorliegenden Ausführungsbeispiel elektrisch und magnetisch nicht leitend ausgestaltet und weist eine elektrische Permittivität sowie eine magnetische Permeabilität auf, die etwa der Permittivität und Permeabilität von Luft entspricht. Die spezifische elektrische Leitfähigkeit des Trägermaterials des Öffnungselementes 4 ist im vorliegenden Ausführungsbeispiel sehr gering und liegt bei einer typisch zu verwenden Übertragungsfrequenz von 13,56 MHz bei etwa 10⁻² S/m. Insbesondere ist es von Vorteil, wenn die spezifische elektrische Leitfähigkeit des Trägermaterials des Öffnungselementes 4 kleiner ist als 10 S/m.

Die magnetische Permeabilität des Trägermaterials des Öffnungselementes 4 ist vorzugsweise kleiner als 1,001*4*π*10⁻⁷ Vs/Am insbesondere kleiner als 4*π*10⁻⁷ Vs/Am. im vorliegenden Ausführungsbeispiel wird als Trägermaterial des Körpers des Öffnungselementes 4 Polypropylen oder Polyethlyen verwendet. Das Trägermaterial weist bei einer typischen Übertragungsfrequenz von 13,56 MHz eine spezifische elektrische Leitfähigkeit von etwa 10⁻³ S/m bis 10⁻¹ S/m, eine elektrische Permittivität von etwa 2*8,854*10⁻¹² As/Vm bis 3*8,854*10⁻¹² As/Vm sowie eine magnetische Permeabilität von etwa 4*π*10⁻⁷ Vs/Am auf.

Selbstverständlich kann auch alternativ eine andere Übertragungsfrequenz, etwa von 120-135 kHz oder eine Übertragungsfrequenz von 860-910 MHz verwendet werden.

In **Fig. 7 bis 12** ist ein alternatives Ausführungsbeispiel der Erfindung dargestellt. Dieses in **Fig. 7 bis 12** dargestellte Ausführungsbeispiel der Erfindung entspricht im Wesentlichen dem in den **Fig. 1 bis 6** dargestellten Ausführungsbeispiel, wobei die Unterschiede zwischen den einzelnen Ausführungsbeispielen im Folgenden erörtert werden.

Im vorliegenden Ausführungsbeispiel ist das Öffnungselement 4, wie in **Fig. 8** dargestellt, zweiteilig ausgebildet und umfasst einen ersten aus nicht leitfähigem Material bestehenden Antennenteil 20 sowie einen zweiten, aus leitfähigem Material bestehenden Basisteil 40. Der Antennenteil 20, der im vorliegenden besonderen Ausführungsbeispiel aus Polyethylen ausgebildet ist,umfasst einen ersten Gehäuseteil 21, in dem der Transponderchip 9 eingebettet oder eingegossen ist. Weiters umfasst der Antennenteil 20 einen ringförmigen Fortsatzteil 22, der vom Gehäuseteil 21 abgeht und der gemeinsam mit dem Gehäuseteil 21 einen Ringkörper ausbildet. Im inneren des Ringkörpers ist die Antenne 8 angeordnet, die im vorliegenden Ausführungsbeispiel drei Windungen aufweist. Die beiden Enden der Antenne 8 sind mit dem Transponderchip 9 verbunden.

Der Basisteil 40 **(****Fig. 10****)** entspricht in dieser besonderen Ausführungsform der Erfindung dem in den **Fig. 3 und 4** dargestellten Öffnungselement 4 mit dem Unterschied, dass anstelle des geschlossenen Verlaufs zwei in Richtung des Antennenteils ragende Rastfortsätze 41, 42 ragen. Diese beiden Rastfortsätze 41, 42 liegen, wie in **Fig. 9** **und** **10** dargestellt, am Ringfortsatz 22 des Antennenteils 20 an. Die beiden vorderen Endbereiche der Rastfortsätze 41, 42 greifen in öffnungen, die im Gehäuseteil 21 des Antennenteils 20 vorgesehen sind, ein, wodurch eine zerstörungsfrei nicht lösbare Verbindung zwischen dem Antennenteil 20 und dem Basisteil 40 hergestellt wird.

Durch die besondere bauliche Ausgestaltung des Öffnungselements 4 wird gewährleistet, dass das Öffnungselement 4 selbst elektromagnetische Wellen weder abschirmt noch verdrängt, sodass im geschlossenen Zustand eine Verdrängung durch die metallische Stirnwand 14 stattfindet, im geöffneten Zustand jedoch eine Funkverbindung zwischen dem Transponder 9 über die Antenne 8 zu einem externen Datenkommunikationsgerät herstellbar ist.

In **Fig. 13** ist eine weitere alternative Ausführungsform der Erfindung dargestellt, die im Wesentlichen einer der beiden ersten Ausführungsformen der Erfindung entspricht. Die in **Fig. 13** dargestellte Ausführungsform weist neben den bereits in den beiden vorangehenden Ausführungsformen dargestellten Merkmalen zusätzlich zwei leitfähige und metallische Plattenelemente 43, 44 auf, die im vorliegenden Ausführungsbeispiel mit der Antenne 8 verbunden sind. Die metallischen Plattenelemente 43, 44 sind im Antennenteil 20 jeweils neben dem Transponderchip 9 angeordnet. Grundsätzlich ist jedoch auch eine alternative Anordnung möglich, wobei die Plattenelemente 43, 44 in einer Position angeordnet sein sollten, die im geöffneten Zustand möglichst von der Stirnwand 14 der Dose 1 entfernt ist und im geschlossenen Zustand möglichst an der Stirnwand 14 der Dose 1 anliegt, in **Fig. 14** ist ein Ersatzschaltbild der im Öffnungselement 4 befindlichen elektronischen Komponenten dargestellt. Eine ausreichende Energieversorgung des Transponderchips 9 ist grundsätzlich nur dann möglich, wenn die Antenne 8 mitsamt aller an diese angeschlossenen Komponenten in Resonanz betrieben wird. Geht man von einer gegebenen Eingangskapazität C_{T} des Transponderchips 9 aus, so ist die Resonanzfrequenz der Anordnung durch die induktivität L_{A} der Antenne 8, der Kapazität C_{A} der Antenne 8 sowie eine eventuell vorhandene Abstimmkapazität Cₜᵤₙₑ bestimmt. Diese Abstimmkapazität Cₜᵤₙₑ wird grundsätzlich so bestimmt, dass der durch die vorstehend beschriebenen Induktivitäten L_{A} und Kapazitäten C_{A}, C_{T} festgelegte Schwingkreis in Resonanz bei einer vorab vorgegebenen Frequenz betrieben werden kann.

Grundsätzlich führt jede weitere auftretende Kapazität Cₓ zu einer Verschiebung der Resonanzfrequenz des so erstellten Schwingkreises, wodurch eine Energieübertragung auf den Transponderchip 9 verhindert wird. Um neben der in den vorigen Ausführungsbeispielen beschriebenen Schwächung der magnetischen Kopplung eine zusätzliche Unterdrückung des Ansprechens des Transponderchips 9 bei geschlossenem Öffnungselement 4 zu erreichen, kann somit durch das Einbringen einer zusätzlichen Kapazität Cₓ in den Schwingkreis die Resonanzfrequenz verändert werden, sodass der Transponder 9 nicht mehr ansprechbar ist.

In Fig. 15 wird der Schwingkreis mit einer parallelen Kapazität Cₓ beaufschlagt, die bei geringem Abstand der Plattenbreite 43, 44 von der Stirnwand 14 der Dose 1 groß ist und die Resonanzfrequenz verschiebt, sodass keine Kommunikation mit dem Transponder 9 möglich ist. Durch das Öffnen des Öffnungselements 4 werden die Plattenelemente 43, 44 von der Stirnwand 14 entfernt, wodurch die Kapazität Cₓ stark verringert wird. Hierdurch wird die Resonanzfrequenz in ihren ursprünglichen Bereich zurückverschoben und eine Kommunikation mit dem Transponderchip ermöglicht.

## Patentansprüche

1. Dose (1) umfassend einen zumindest teilweise elektrisch leitfähigen Körper, insbesondere aus Aluminium, wobei auf einer Stirnwand (14) der Dose (1) ein Verschlussbereich (2) durch eine Sollbruchkante (3) zumindest teilweise abgegrenzt ist und wobei die Dose (1) ein Öffnungselement (4) aufweist, wobei das Öffnungselement (4) in seiner Ausgangslage an der Stirnwand (14) der Dose (1) zumindest teilweise flächig anliegt und mit der Stirnwand (14) an zumindest einer Stelle verbunden ist,
- wobei bei Verschwenken des Öffnungselements (4) gegenüber der Dose (1) von der Ausgangslage in eine Öffnungslage der Verschlussbereich (2) von der Sollbruchkante (3) abreißt und sich in dem von der Sollbruchkante (3) abgegrenzten Zwischenbereich eine Öffnung (7) zum Entleeren des Inhalts der Dose (1) ausbildet,
wobei
- das Öffnungselement (4) einen Trägerkörper aus elektrisch und/oder magnetisch isolierendem Material aufweist oder aus diesem besteht,
- das Öffnungselement (4) eine am oder im Trägerkörper angeordnete Antenne (8) sowie einen an die Antenne (8) angeschlossenen Transponderchip (9) aufweist, wobei die Antenne (8) in der Ausgangslage im Nahebereich der Dose (1), insbesondere im Nahebereich der Stirnwand (14) der Dose (1), angeordnet ist, und
- derjenige Wand- oder Oberflächenbereich (5) der Stirnwand (14) der Dose (1), an dem das Öffnungselement (4) anliegt, elektrisch und/oder magnetisch leitfähig ist, wobei
- das Öffnungselement (4) zweistückig ausgebildet ist und einen an der Stirnwand angelenkten Basisteil (40) sowie einen mit dem Basisteil (40) verbundenen und einen elektrisch nicht leitfähigen Körper aufweisenden Antennenteil (20) aufweist, wobei der Transponderchip (9) und die Antenne im Antennenteil (20) angeordnet, insbesondere eingegossen, sind und wobei der Basisteil (40) zumindest einen Fortsatz (41, 42), insbesondere zwei Fortsätze (41, 42), aufweist, der mit dem Antennenteil (20) verbunden ist und insbesondere an diesem anliegt, und
- der Antennenteil (20) einen Gehäuseteil (21) und einen Ringfortsatz (22) aufweist, wobei die Antenne (8) zumindest teilweise im Ringfortsatz (22) verläuft, **dadurch gekennzeichnet, dass** der Gehäuseteil (21) zumindest eine Rastausnehmung aufweist, in die das Ende des Fortsatzes (41, 42) des Basisteils (40) eingreift und eingerastet ist, und wobei der Fortsatz (41, 42) des Basisteils (40) am Ringfortsatz (22) des Antennenteils (20) anliegt.

2. Dose (1) nach Anspruch 1, **dadurch gekennzeichnet, dass** die Antenne (8) in der Ausgangslage einen maximalen Abstand von weniger als 3 mm, insbesondere von weniger als 0,2 mm, von der Wand der Dose (1) aufweist und/oder dass die Antenne (8) zumindest teilweise an der Dose (1) anliegt.

3. Dose (1) nach einem der vorangehenden Ansprüche, **dadurch gekennzeichnet, dass** die Antenne (8) in Öffnungslage vom leitfähigen Wand- und Oberflächenbereich (5) der Dose (1) abgehoben und/oder entfernt ist und/oder zu diesem verschwenkt ist und dass die Antenne (8) in Öffnungslage elektromagnetische Felder, die auf sie gerichtet sind, in einer für drahtlose Datenkommunikation ausreichenden Form und Intensität empfängt und an den Transponderchip (9) weitergibt.

4. Dose (1) nach einem der vorangehenden Ansprüche, **dadurch gekennzeichnet, dass** bei einer Übertragungsfrequenz im Bereich zwischen 100 kHz und 1000 MHz, insbesondere im Bereich von 120 bis 135 kHz, im Bereich von 13 bis 14 MHz oder im Bereich von 860 bis 910 MHz, derjenige Wand- oder Oberflächenbereich (5) der Dose (1), an dem das Öffnungselement (4) anliegt
- eine spezifische elektrische Leitfähigkeit von zumindest 10 S/m, insbesondere von zumindest 10⁶ S/m aufweist, **und/oder**
- eine magnetische Permeabilität von zumindest (1+2,2*10⁻⁵)* 4*π*10⁻⁷ Vs/Am, insbesondere von zumindest 0,99*4*π*10⁻⁷ Vs/Am, aufweist.

5. Dose (1) nach einem der vorangehenden Ansprüche, **dadurch gekennzeichnet, dass** der Verschlussbereich (2) und die Sollbruchkante (3) an einer Stirnwand (14) der Dose (1) ausgebildet sind.

6. Dose (1) nach einem der vorangehenden Ansprüche, **dadurch gekennzeichnet, dass** das Öffnungselement (4) über eine Niete (6) mit der Dose (1) verbunden ist, wobei das Öffnungselement (4) einen in seiner Ausgangslage am Verschlussbereich (2) anliegenden Druckbereich (10) zum Eindrücken des Verschlussbereichs (2) aufweist.

7. Dose (1) nach Anspruch 6, **dadurch gekennzeichnet, dass** das Öffnungselement einen dem Druckbereich (10) gegenüberliegenden Betätigungsbereich (11) aufweist, wobei der Druckbereich (10) und der Betätigungsbereich (11) durch die Niete (6) voneinander abgegrenzt sind und gemeinsam wie ein zweiarmiger durch die Niete angelenkter Hebel wirken.

8. Dose (1) nach Anspruch 6 oder 7 **dadurch gekennzeichnet, dass** das Öffnungselement (4) ein gegenüber seinem Körper verschwenkbares Verbindungselement (12) aufweist, das mittels der Niete (6) mit der Wand der Dose (1) verbunden ist.

9. Dose (1) nach einem der vorangehenden Ansprüche, **dadurch gekennzeichnet, dass** in Ausgangslage der Transponderchip (9) in einem Bereich des Öffnungselements (4) angeordnet ist, der am Verschlussbereich (2) anliegt.

10. Dose (1) nach einem der vorangehenden Ansprüche, **dadurch gekennzeichnet, dass** die Antenne (8) ringförmig ausgebildet ist und insbesondere in einer entlang der Umfangskante des Öffnungselements (4) in einer Einkerbung angeordnet ist.

11. Dose nach einem der vorangehenden Ansprüche, **gekennzeichnet durch** zwei mit der Antenne (8), insbesondere leitfähig oder kapazitiv, gekoppelten Plattenelementen (43, 44), die in ihrer Ausgangslage an der Stirnwand (14) angenähert sind und in Öffnungslage von der Stirnwand (14) beabstandet angeordnet sind.

## Claims

1. The can (1) comprises one at least partially electrically conductive body, in particular made of aluminium, wherein on a front wall (14) of the can (1) a closure region (2) is at least partially delimited by a predetermined breaking edge (3) and wherein the can (1) has an opening element (4). The opening element (4) in the initial position of same at least partially rests against the front wall (14) of the can (1) in a planar manner and is connected to the front wall (14) at at least one point.
- When the opening element (4) is pivoted with respect to the can (1) from the initial position into an open position, the closure region (2) tears off from the predetermined breaking edge (3) and an opening (7) forms in the intermediate region delimited by the predetermined breaking edge (3) for emptying the contents of the can (1).
wobei
- The opening element (4) comprises a carrier body made of electrically or magnetically insulating material or consists of same.
- The opening element (4) has an antenna (8) arranged on or in the carrier body and a transponder chip (9) connected to the antenna (8), wherein the antenna (8) in the initial position is arranged in the contiguous region of the can (1), in particular in the contiguous region of the front wall (14) of the can (1).
- Said wall or surface region (5) of the front wall (14) of the can (1) against which the opening element (4) rests is electrically and/or magnetically conductive.
The opening element (4) is designed in two pieces and comprises a base part (40) which is articulated on the front wall and an antenna part (20) which is connected to the base part (40) and has an electrically non-conductive body, wherein the transponder chip (9) and the antenna are arranged in the antenna part (20), in particular cast, and wherein the base part (40) has at least one projection (41, 42), in particular two projections (41, 42), which is connected to the antenna part (20) and rests in particular against same.
The antenna part (20) has a housing part (21) and an annular projection (22), wherein the antenna (8) extends at least partially in the annular projection (22), **characterised in that** the housing part (21) has at least one latching recess, into which the end of the projection (41, 42) of the base part (40) meshes and is engaged, and wherein the projection (41, 42) of the base part (40) rests against the annular projection (22) of the antenna part (20).

2. A can (1) according to the claim (1), **characterised in that** the antenna (8) in the initial position has a maximum spacing of less than 3 mm, in particular of less than 0.2 mm, from the wall of the can (1) and/or the antenna (8) rests at least partially against the can (1).

3. A can (1) according to one of the preceding claims, **characterised in that** the antenna (8) in the open position is raised and/or removed from the conductive wall and surface region (5) of the can (1) and/or pivoted with respect to same, and that the antenna (8) in the open position receives electromagnetic fields directed at same in a form and intensity sufficient for wireless data communication and relays said fields to the transponder chip (9).

4. A can (1) according to one of the preceding claims, **characterised in that** in the case of a transmission frequency in the range between 100 kHz and 1000 MHz, in particular in the range from 120 to 135 kHz, in the range of 13 to 14 MHz or in the range from 860 to 910 MHz, said wall or surface region (5) of the can (1), against which the opening element (4) rests
- has a specific electrical conductivity of at least 10 S/m, in particular of at least 106 S/m, **and/or**
- has a magnetic permeability of at least (1+2.2*10⁻⁵)* 4*π*10⁻⁷ Vs/Am, in particular of at least 0.99*4*π*10⁻⁷ Vs/Am.

5. A can (1) according to one of the preceding claims, **characterised in that** the closure region (2) and the predetermined breaking edge (3) are designed on a front wall (14) of the can (1).

6. A can (1) according to one of the preceding claims, **characterised in that** the opening element (4) is connected to the can (1) via a rivet (6), wherein the opening element (4) in the initial position of same has a pressure region (10) resting against the closure region (2) for pressing in the closure region (2).

7. A can (1) according to claim 6, **characterised in that** the opening element has an actuating region (11) opposite the pressure region (10), wherein the pressure region (10) and the actuating region (11) are delimited from each other by the rivet (6) and together act as a two-arm lever articulated via the rivet.

8. A can (1) according to claim 6 or 7, **characterised in that** the opening element (4) has a connection element (12) which can be pivoted with respect to the body of same, said connection element being connected to the wall of the can (1) by means of the rivet (6).

9. A can (1) according to one of the preceding claims, **characterised in that** in the initial position the transponder chip (9) is arranged in the region of the opening element (4), which rests against the closure region (2).

10. A can (1) according to one of the preceding claims, **characterised in that** the antenna (8) is formed in the shape of a ring and in particular is arranged in a notch along the circumferential edge of the opening element (4).

11. A can according to one of the preceding claims, **characterised by** two plate elements (43, 44) which are coupled to the antenna (8), in particular in a conductive or capacitive manner, which are brought close to the front wall (14) in the initial position of same and are arranged spaced from the front wall (14) in the open position.

## Revendications

1. Boîte (1) comprenant un corps au moins partiellement conducteur de l'électricité, en particulier en aluminium, dans laquelle, sur une paroi avant (14) de la boîte (1), une zone de fermeture (2) est au moins partiellement délimitée par une arête de rupture (3), et la boîte (1) présentant un élément d'ouverture (4), l'élément d'ouverture (4) s'appuyant, dans sa position de départ, au moins partiellement en pleine surface contre la paroi avant (14) de la boîte (1), et étant relié à la paroi avant (4) au moins en un point,
- dans laquelle, lors d'un pivotement de l'élément d'ouverture (4) par rapport à la boîte (1), de la position de départ à une position d'ouverture, la zone de fermeture (2) s'arrache de l'arête de rupture (3), et, dans la zone intermédiaire délimitée par l'arête de rupture (3), forme une ouverture (7) pour vider le contenu de la boîte (1),
dans laquelle
- l'élément d'ouverture (4) comprend un corps formant support, en un matériau électriquement et/ou magnétiquement isolant, ou est constitué de ce dernier,
- l'élément d'ouverture (4) comprend une antenne (8), disposée contre ou dans le corps formant support, ainsi qu'une puce transpondeur (9) connectée à l'antenne (8), l'antenne (8) étant, dans la position de départ, disposée au voisinage immédiat de la boîte (1), en particulier au voisinage immédiat de la paroi avant (14) de la boîte (1), et
- la zone de paroi ou de surface (5) de la paroi avant (14) de la boîte (1) contre laquelle s'appuie l'élément d'ouverture (4) est électriquement et/ou magnétiquement conductrice,
- dans laquelle l'élément d'ouverture (4) est constitué de deux pièces, et comprend une pièce de base (40) articulée à la paroi avant, ainsi qu'une pièce formant antenne (20), reliée à la pièce de base (40) et présentant un corps électriquement non conducteur, la puce transpondeur (9) et l'antenne étant disposées, en particulier coulées, dans la pièce formant antenne (20), et la pièce de base (40) comprenant au moins un prolongement (41, 42), en particulier deux prolongements (41, 42), qui sont reliés à la pièce formant antenne (20) et en particulier s'appuient contre cette dernière, et
- la pièce formant antenne (20) comprend une pièce formant boîtier (21) et un prolongement annulaire (22), l'antenne (8) courant au moins partiellement dans le prolongement annulaire (22), **caractérisée en ce que** la pièce formant boîtier (21) comprend au moins un évidement d'encliquetage, dans lequel l'extrémité du prolongement (41, 42) de la pièce de base (40) entre en prise et s'encliquète, et le prolongement (41, 42) de la pièce de base (40) s'appuie contre le prolongement annulaire (22) de la pièce formant antenne (20).

2. Boîte (1) selon la revendication 1, **caractérisée en ce que** l'antenne (8), dans la position de départ, présente par rapport à la paroi de la boîte (1) une distance maximale inférieure à 3 mm, en particulier inférieure à 0,2 mm, et/ou que l'antenne (8) s'appuie au moins partiellement contre la boîte (1).

3. Boîte (1) selon l'une des revendications précédentes, **caractérisée en ce que** l'antenne (8), dans la position d'ouverture, est soulevée de la zone de paroi et de surface (5) conductrice de la boîte (1), et/ou en est éloignée, et/ou est pivotée par rapport à cette dernière, et que l'antenne (8), dans la position d'ouverture, reçoit des champs électromagnétiques qui sont dirigés sur elle, sous une forme suffisante pour une communication de données sans fil, et les transfère à la puce transpondeur (9).

4. Boîte (1) selon l'une des revendications précédentes, **caractérisée en ce que**, pour une fréquence de transmission dans la plage comprise entre 100 kHz et 1000 MHz, en particulier dans la plage de 120 à 135 kHz, dans la plage de 13 à 14 MHz ou dans la plage de 860 à 910 MHz, la zone de paroi ou de surface (5) de la boîte (1) contre laquelle s'appuie l'élément d'ouverture (4), présente
- une conductivité électrique spécifique d'au moins 10 S/m, en particulier d'au moins 106 S/m, **et/ou**
- une perméabilité magnétique d'au moins (1+2,2*10⁻⁵)* 4*π*10⁻⁷ Vs/Am, en particulier d'au moins 0,99*4*π*10⁻⁷ Vs/Am.

5. Boîte (1) selon l'une des revendications précédentes, **caractérisée en ce que** la zone de fermeture (2) et l'arête de rupture (3) sont configurées contre une paroi avant (14) de la boîte (1).

6. Boîte (1) selon l'une des revendications précédentes, **caractérisée en ce que** l'élément d'ouverture (4) est relié à la boîte (1) par l'intermédiaire d'un rivet (6), l'élément d'ouverture (4) présentant une zone de compression (10), s'appuyant dans sa position de départ contre la zone de fermeture (2), pour enfoncer la zone de fermeture (2).

7. Boîte (1) selon la revendication 6, **caractérisée en ce que** l'élément d'ouverture présente une zone de manoeuvre (11), opposée à la zone de compression (10), la zone de compression (10) et la zone de manoeuvre (11) étant délimitées l'une par rapport à l'autre par le rivet (6), et agissant ensemble comme un levier à deux bras, articulé par le rivet.

8. Boîte (1) selon la revendication 6 ou 7, **caractérisée en ce que** l'élément d'ouverture (4) présente un élément d'assemblage (12), pouvant pivoter par rapport à son corps, qui est relié à la paroi de la boîte (1) par le rivet (6).

9. Boîte (1) selon l'une des revendications précédentes, **caractérisée en ce que**, dans la position de départ, la puce transpondeur (9) est disposée dans une zone de l'élément d'ouverture (4) qui s'appuie contre la zone de fermeture (2).

10. Boîte (1) selon l'une des revendications précédentes, **caractérisée en ce que** l'antenne (8) a une forme annulaire, et en particulier est disposée dans une encoche le long de l'arête périphérique de l'élément d'ouverture (4).

11. Boîte (1) selon l'une des revendications précédentes, **caractérisée par** deux éléments formant plaque (43, 44), couplés, en particulier par couplage conductif ou capacitif, à l'antenne (8), qui dans sa position de départ sont rapprochés de la paroi avant (14) et, dans la position d'ouverture, sont disposés à distance de la paroi avant (14).
